(19) Europäisches Patentamt
European Patent Office
Office européen des brevets

(11) EP 0 549 238 B1

(12) EUROPEAN PATENT SPECIFICATION

(45) Date of publication and mention of the grant of the patent:
**08.07.1998 Bulletin 1998/28**

(51) Int Cl.[6]: **H04N 7/30**, H04N 11/04

(21) Application number: **92311434.2**

(22) Date of filing: **15.12.1992**

# (54) Transmitting and receiving system for high-efficiency coding of a composite television signal

System zum Senden und Empfangen von einem FBAS-Fernsehsignal mit hoher Kodierwirksamkeit

Système de transmission et de réception pour le codage à haute efficacité d'un signal composite de télévision

(84) Designated Contracting States:
**DE FR GB**

(30) Priority: **25.12.1991 JP 343153/91**
**31.01.1992 JP 16456/92**
**14.02.1992 JP 28223/92**

(43) Date of publication of application:
**30.06.1993 Bulletin 1993/26**

(73) Proprietor: **NIPPON HOSO KYOKAI**
**Tokyo (JP)**

(72) Inventors:
- **Tsutsui, Takeo, c/o NHK Hoso Senta Tokyo (JP)**
- **Miyazaki, Osamau, c/o NHK Hoso Senta Tokyo (JP)**
- **Watanabe, Ryu, c/o NHK Hoso Senta Tokyo (JP)**
- **Hara, Toshiaki, c/o NHK Hoso Senta Tokyo (JP)**

(74) Representative: **Senior, Alan Murray**
**J.A. KEMP & CO.,**
**14 South Square,**
**Gray's Inn**
**London WC1R 5LX (GB)**

(56) References cited:
**EP-A- 0 019 936** **US-A- 4 510 578**

- **SIXTH ANNUAL INTERNATIONAL PHOENIX CONFERENCE ON COMPUTERS AND COMMUNICATIONS, February 1987, SCOTTSDALE, US pages 183 - 187 COLEF ET AL 'NTSC COMPOSITE CODING FOR VIDEO CONFERENCING SYSTEMS USING THE HADAMARD TRANSFORM'**
- **IEEE INTERNATIONAL CONFERENCE ON COMMUNICATIONS: INTEGRATING COMMUNICATION FOR WORLD PROGRESS, June 1983, BOSTON, US pages 458 - 462 KWATRA ET AL 'NTSC COMPOSITE VIDEO AT 1.6 BITS/ PEL'**
- **PATENT ABSTRACTS OF JAPAN vol. 013, no. 195 (E-754) 10 May 1989 & JP-A-01 016 193 (MATSUSHITA ELECTRIC INDUSTRIAL CO. LTD) 19 January 1989**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 549 238 B1

Printed by Jouve, 75001 PARIS (FR)

## Description

The present invention generally relates to a transmitting and receiving system for high-efficiency coding of a composite television (TV) signal and, more particularly, to a transmitting and receiving system for high-efficiency coding of a composite TV signal without demodulating the same.

In transmission of TV signals, although an analog transmission system using frequency modulation is the mainly employed currently, a digital transmission system would be desirable from the viewpoint of preventing deterioration of image quality during transmission and effective use of a transmission path. However, if a TV signal is itself digitalized, the amount of information of the digital signal is so enormous that the transmission path cannot be efficiently used. Therefore, an encoding technique, specifically a high-efficiency coding technique is required in the digital transmission system.

The encoding of a TV signal is performed generally using the block transform method and is of two types: one is the component coding system in which a luminance signal and two color signals of the TV singal as component signals are encoded separately and the other is a composite coding system wherein a composite signal into which the above three signals are multiplexed is encoded as they are.

In the component coding system, the TV signal can be encoded with a low transmission rate because there is not a color sub-carrier signal with a high frequency. Therefore, the component coding system is mainly used at present.

In transmitting a composite signal by a component coding system, however, the component signals need to be separated from the composite signal before being encoded on a transmission side. Also, a composite signal needs to be synthesized from transmitted component singals on a receiving side. Therefore, there is a problem that it is difficult to prevent deterioration of image quality due to the above separation and synthesis processing. In addition, there is also a problem that the scale of hardware necessary for performing the separation and synthesis is large. Further, present broadcasting equipments use almost such a composite signal as input/output signal. For the purpose of maintaining of the image quality, therefore, it would desirable to employ the composite coding system for the above reasons.

For example, the article by Kwatra and Fatmi entitled "NTSC Composite Video at 1.6 Bits/Pel" (IEEE International Conference on Communications, June 1983,458) discloses a system for coding a video signal which involves DCT transforming blocks of 4x4 pixels from frames of the composite colour video signal. Documents which disclose other examples of coding the composite signal are : EP-A-0,019,936; US-A-4,510,578; and the article by Colef et al. entitled "NTSC Composite Coding For Video Conferencing Systems Using The Hadamard Transform" (Sixth Annual International Conference on Computers and Communications, February 1987, 183) which also mentions coding of the component signals.

In conventional composite coding systems, the encoding is performed on units which are blocks having a constant size with no regard to characteristics of an image to be transformed. In case of a monotonous image such as that of white paper, even if the amount of information from the image is reduced, the quantity of code words cannot be reduced below a predetermined level, resulting in limitation of the coding efficiency. In addition, the blocking is accompanied with deterioration of quality of the reproduced image. That is, the high-efficiency coding using the block transform method causes inconsistencies of the reproduced images, i.e., a so-called block distortion at the boundary between blocks as units to be transformed, resulting in deterioration of quality of the reproduced image.

According to a first aspect of the present invention, there is provided a high-efficiency coding system for a composite color video signal, comprising: generating means for generating luminance values from the luminance signal of the composite colour video signal, and amplitude values and phase values of the carrier chrominance signal of the composite color signal, with respect to each of a plurality of pixels of said composite color video signal; coefficient generating means for processing, respectively, the luminance values, the amplitude values and the phase values of selected pixels within a processing block as a processing unit by performing an orthogonal transform to generate a luminance coefficient set, an amplitude coefficient set and a phase coefficient set; and encoding means for coding said luminance coefficient set, said amplitude coefficient set and said phase coefficient set to generate a code word sequence.

According to a second aspect of the present invention, there is provided a system for decoding a code word sequence into a composite color video signal comprising: means for decoding a code word sequence to generate a luminance coefficient set, an amplitude coefficient set and a phase coefficient set, for every processing block as a processing unit; inverse transform means for processing said luminance coefficient set, said amplitude coefficient set and said phase coefficient set at every predetermined frequency component by performing an inverse orthogonal transform to reproduce luminance values, amplitude values and phase values of selected pixels within a processing block as a processing unit; and means for reproducing a composite color video signal from the amplitude values, the phase values and the luminance values for each of a plurality of pixels.

According to a third aspect of the present invention, there is provided a method of high-efficiency coding a composite color television signal, comprising the steps of: obtaining a luminance signal, and an amplitude signal and a phase signal representative of a carrier chrominance signal component, from a composite color television signal for each of a plurality of pixels; processing, respectively, a luminance signal, an amplitude signal and a phase signal for selected pixels within a processing block as a processing unit by performing an orthogonal transform to generate a luminance coefficient set, an amplitude coefficient set and a phase coefficient set; and encoding said luminance coefficient set, said amplitude coefficient set and said phase coefficient set to generate a code word sequence.

According to a fourth aspect of the present invention, there is provided a method for reproducing a composite television signal from a code word sequence comprising the steps of: decoding a code word sequence to generate a luminance coefficient set, an amplitude coefficient set and a phase coefficient set; processing said luminance coefficient set, said amplitude coefficient set and said phase coefficient set at every predetermined frequency component by performing an inverse orthogonal transform to reproduce a luminance signal, an amplitude signal and a phase signal for selected pixels within a processing block as a processing unit, one of said predetermined frequency components being a DC component; and reproducing a composite color television signal from said amplitude signal, said phase signal and said luminance signal for a plurality of pixels.

The present invention relates also to a TV signal transmitting and receiving system.

The above and other features, and advantages of the present invention will become apparent form the following detailed description of an illustrative embodiment thereof to be read in conjunction with the accompanying drawings, in which:

FIG. 1 is a block diagram showing a composite TV signal transmitting and receiving system according to an embodiment of the present invention and the detail of a TV signal transmitting system;
FIG. 2 is a block diagram showing in detail a block forming circuit provided within the transmitting and receiving system shown in FIG. 1;
FIG. 3 is a block diagram showing in detail a receiving system provided within the transmitting and receiving system shown in FIG. 1;
FIG. 4 is a block diagram showing in detail an inverse orthogonal transform circuit provided within the receiving system shown in FIG. 3;
FIGS. 5A through 5C are diagrams used to explain a composite color TV signal;
FIG. 6 is a diagram used to explain the coding of a carrier chrominance signal;
FIGS. 7A and 7B are diagrams used to explain the change of block size; and
FIGS. 8A and 8B are diagrams used to explain an inverse transform corresponding to orthogonal transform.

A transmitting and receiving system using a high-efficiency coding of a composite color TV signal according to the present invention will hereinafter be described with reference to the accompanying drawings.

Initially, an arrangement of a transmitting and receiving system will be described with reference to FIG. 1 of the accompanying drawings. As shown in FIG. 1, the transmitting and receiving system includes a transmitting unit 2, a receiving unit 4 and a transmission medium 3. The transmitting unit 2 includes a clock generator 14, an analog-to-digital (A/D) converter 12, a bandpass filter (BPF) 16, a calculating circuit 18, a subtracter 20, a block forming unit 22 including three block forming circuits 22-i (i = 1 to 3), an orthogonal transform unit 24 including three discrete cosine transform (DCT) circuits 24-i (i = 1 to 3) provided in association with the block forming circuits 22-i, a multiplexer (MUX) 26 and an encoding circuit 28.

Referring to FIG. 3 of the accompanying drawings, the receiving unit 4 includes a decoding circuit 72, a demultiplexer (DEMUX) 74, an inverse discrete cosine transform ($DCT^{-1}$) unit 76, a block synthesizing unit 78, a synthesizing circuit 80, an adder 82, a digital-to-analog (D/A) converter 84, and a clock generator 86. The inverse discrete cosine transform ($DCT^{-1}$) unit 76 includes three $DCT^{-1}$ circuits 76-i (i = 1 to 3). The block synthesizing unit 78 includes three block synthesizing circuits 78-i (i = 1 to 3) provided in association with the three $DCT^{-1}$ circuits 76-i.

Operation of the composite TV signal transmitting and receiving system according to the present invention will be described below.

In the composite color TV signal, as shown in Fig. 5A, a luminance signal is superimposed upon a carrier chrominance signal that represents a color of an image of the TV signal as shown in FIG. 5B of the accompanying drawings. Therefore, an amplitude difference between adjacent sampling points in the composite TV signal is increased as compared with that in only the luminance signal in case that a luminance signal is changed monotonically as shown in FIG. 5A of the accompanying drawings. Therefore, according to the present invention, the composite TV signal is separated to provide a luminance signal and a carrier chrominance signal which are then independently processed in an orthogonal transform fashion.

Referring back to FIG. 1, a composite TV signal is input to the transmitting unit 2. The clock generator 14 generates a clock signal having a frequency of 14.3 MHz which is substantially four times of the color subcarrier signal (3.58 MHz), in synchronism with the input composite TV signal, and supplies the same to the A/D converter 12. The A/D converter 12 samples the input composite TV signal to provide a digital TV signal composed of a plurality of pixels in response to the clock signal input thereto from the clock generator 14. The digital TV signal is supplied to the BPF 16 and the subtracter 20. The BPF 16 limits the band of the signal supplied thereto to remove the luminance signal from the digital TV signal to thereby extract the carrier chrominance signal. The carrier chrominance signal thus extracted is supplied to the calculating circuit 18.

FIG. 6 of the accompanying drawings shows an output signal from the BPF 16. As shown in FIG. 6, an amplitude at a sampling point $s_i$ (i = 1 to n) is given by $e_i$. The calculating circuit 18 assumes that a phase reference point of the sampling is a point $s_k$ having a value of i (= k) at which the calculation of i in modulo 4 produces the remainder of 0 and also assumes that the succeeding points of the point $s_k$ are $s_{k+1}$, $s_{k+2}$, $s_{k+3}$. When sampling values of four points from the phase reference point $s_k$ to the point $s_{k+3}$ are $e_k$, $e_{k+1}$, $e_{k+2}$, $e_{k+3}$, n that satisfies $e_n \leq 0$ and $e_{n+1} \geq 0$ is calculated and the calculated result is set as n=q.

Then, an amplitude $E_{cq}$ and a phase $\phi_q$ are calculated from the following equations (1) and (2):

$$E_{cq} = \sqrt{{e_q}^2 + {e_{q+1}}^2} \quad (1)$$

$$\phi_q = [q(\mathrm{mod}4) + 1]\pi/2 - \sin^{-1}(e_{q+1}/E_{cq}) \quad (2)$$

The amplitude $E_{cq}$ and phase $\phi_q$ thus calculated are supplied to the block forming circuits 22-1 and 22-2, respectively. While amplitudes and phases for four pixels are determined at every full-wave cycle, i.e., on the basis of four sampling values as described above, the present invention is not limited thereto and amplitudes and phases may be determined on the basis of much more sampling values depending on the frequency of the clock signal from the clock generator 14. In that case, the amplitude and phase thus determined become an amplitude and a phase of a pixel that corresponds to a sampling point. Furthermore, in the present frequency of the clock generator 14, amplitudes and phases for two pixels may be determined at every half-wave cycle, i.e., on the basis of two sampling values. In this case, a signal representative of either positive half-wave or negative half-wave must be added. The digital TV signal and the carrier chrominance signal from the BPF 16 are supplied to the subtracter 20. The subtracter 20 subtracts the carrier chrominance signal from the digital TV signal to detect a luminance Y of each pixel. The luminance Y thus detected is supplied to the block forming circuit 22-3.

It is customary that the block forming circuits 22-i supply data of 8 x 8 pixels of each basic block as a unit block to the orthogonal transform circuits 24-i as one block. When a compressing ratio is intended to be improved by varying the block size depending on the features of an image, however, a circuit arrangement shown in FIG, 2 of the accompanying drawings can be applied to the block forming circuits 22-i. Each of the block forming circuits 22-i receives data of either one of the amplitude $E_{cq}$, the phase $\phi_q$ and the luminance Y at every corresponding pixel and determines an area that is to be processed according to the orthogonal transform fashion to thereby form a block. A pixel signal of any one of amplitude, phase and luminance is supplied to a basic block DCT circuit 52 and a memory 62 of the block forming circuits 22-i. The basic block DCT circuit 52 processes the pixel signals representative of the basic block of 8 x 8 pixels in an orthogonal transform fashion, i.e., in a DCT (discrete cosine transform) fashion in this embodiment to produce 64 DCT coefficients $D_{ij}$ (i = 1 to 8 and j = 1 to 8). Each of the DCT coefficients $D_{ij}$ is scaled with a corresponding factor $S_{ij}$ by a scaling circuit 54 to provide a DCT coefficient $D_{sij}$. The DCT coefficient $D_{sij}$ is supplied to a summing circuit 56. An example of the scaling factor $S_{ij}$ is illustrated on the table below where $D_{sij} = [D_{ij}/S_{ij} + 0.5]$ and [ ] is a Gaussian symbol, i.e., symbol that represents the maximum integer of integers under a real number within [ ].

## TABLE

HORIZONTAL(j)

| VERTICAL (i) | 0 | 1 | 2 | 3 | 4 | 5 | 6 | 7 |
|---|---|---|---|---|---|---|---|---|
| 0 | 1.0 | 1.0 | 1.1 | 2.4 | 4.0 | 6.7 | 9.5 | 12.3 |
| 1 | 1.0 | 1.0 | 1.4 | 2.8 | 4.4 | 8.7 | 13.5 | 17.4 |
| 2 | 1.0 | 1.4 | 1.8 | 3.4 | 4.8 | 10.4 | 17.4 | 22.6 |
| 3 | 1.1 | 1.5 | 2.0 | 3.7 | 5.2 | 12.3 | 19.0 | 26.9 |
| 4 | 1.3 | 1.8 | 2.2 | 4.1 | 6.2 | 13.5 | 22.6 | 29.3 |
| 5 | 1.8 | 2.2 | 2.6 | 5.8 | 8.7 | 16.0 | 24.7 | 32.0 |
| 6 | 2.0 | 2.6 | 3.1 | 7.4 | 11.3 | 19.1 | 26.9 | 35.0 |
| 7 | 2.4 | 2.8 | 3.4 | 8.7 | 13.5 | 22.6 | 32.0 | 39.0 |

The summing circuit 56 sums the DCT coefficient $D_{sij}$ having the same frequency component of the horizontal and vertical directions over a plurality of basic blocks, e.g., 4 x 4 basic blocks to provide a coefficient sum $\Sigma D_{sij}$. The calculated result is supplied to an analyzer 58. The analyzer 58 analyzes a distribution of the summing coefficient $\Sigma D_{sij}$ of 0 and supplies the analyzed results to a determining circuit 64. The determining circuit 64 determines a plurality of blocks that should be processed as a unit block and supplies pixel signals corresponding to these blocks to be processed to a selecting circuit 66. The selecting circuit 66 selects 8 x 8 pixels from pixels of the pixel signals supplied thereto and outputs the selected 8 x 8 pixels to the DCT circuits 24-i as the pixels of a unit block. In this case, the determining circuit 64 outputs data representative of the size of the block to be processed to the multiplexer (MUX) 26.

How to select the block size will be described with reference to FIGS. 7A and 7B. As shown in FIG. 7A, let us consider basic blocks of 4 x 4. An area assumes an upper left one basic block area, an area B assumes an area which results from subtracting the area A from an area of the upper left basic blocks of 2 x 2 elements and an area C assumes an area which results from subtracting the areas A and B from an area of the basic blocks of 4 x 4. Also, as shown in FIG. 7B, let us consider a coefficient area of 8 x 8 elements. An area c assumes an upper left area of 2 x 2 elements, an area b assumes an area which results from subtracting the area c from an upper left area of 4 x 4 elements and an area a assumes an area which results from subtracting the areas b and c from an area of 8 x 8 elements. The determining circuit 64 determines the blocks to be processed as follows. When any coefficient $\Sigma D_{sij}$ which is not zero exists in the area a of FIG. 7B, the area A in FIG. 7A is selected as the unit block to be processed. When all coefficients $\Sigma D_{sij}$ in the area a are all zero and any coefficient $\Sigma D_{sij}$ which is not zero exists in the area b, the areas A+B in FIG. 7A is selected as the unit block to be processed. When all coefficients $\Sigma D_{sij}$ in the areas a and b are all zero and any coefficient $\Sigma D_{sij}$ which is not zero exists in the area c, the areas A+B+C in FIG. 7A is selected as the unit block to be processed. The selecting circuit 66 selects 8 x 8 pixels from the unit block to be processed and outputs the selected 8 x 8 pixels to the corresponding DCT circuit. The above processing may be performed by the respective block forming circuits. Alternatively, one block forming circuit may perform the above processing to determine the unit block to be processed and other block forming circuits may follow the determined result.

The orthogonal transform unit 24 processes the amplitude $E_c$, the phase $\phi$ and the luminance Y of each pixel of the unit block (8 x 8 pixels) to be processed in an orthogonal transform fashion to generate transform coefficients. The orthogonal transform unit 24 includes three DCT circuits 24-i (i = 1 to 3) for effecting the orthogonal transform, i.e., DCT (discrete cosine transform) in this embodiment. The three DCT circuits 24-i are associated with the block forming circuits 22-i, respectively. As a result of the DCT processing, 64 transform coefficients are generated and weighted by predetermined weighting factors, respectively. Coefficients from the respective DCT circuits 24-i and block size data from the determining circuit 64 are supplied to the multiplexer (MUX) 26. The MUX 26 multiplexes these input data and outputs a multiplexed signal to the encoding circuit 28. The encoding circuit 28 encodes the multiplexed signal supplied thereto from the MUX 26 to provide a transmission signal. The transmission signal is transmitted through the transmission medium 3 to the receiving unit 4.

FIG. 3 of the accompanying drawings shows in block diagram an arrangement of the receiving unit 4. As shown in FIG. 3, in the receiving unit 4, the transmission signal received through the transmission medium 3 is decoded by the decoding circuit 72 and then output to the demultiplexer (DEMUX) 74. The DEMUX 74 demultiplexes the signal thus decoded and outputs a demultiplexed signal to the inverse transform circuit 76. That is, the transform coefficients of amplitude, phase and luminance are output to the inverse transform circuits 76-i (i = 1 to 3), respectively. These transform coefficients are weighted by inverse numbers of the weighting factors in the orthogonal transform circuit 24 (see FIG. 1) and then processed in an inverse transform fashion of the orthogonal transform processing in the transmitting unit 2, i.e., in an inverse DCT fashion. FIG. 4 of the accompanying drawings shows the inverse transform circuits 76-i in detail.

As shown in FIG. 4, a separator 42 separates the weighted DCT coefficients to provide the DCT coefficients of a DC component and DCT coefficients of other component. The DCT coefficients of the DC component are supplied to a $DCT^{-1}$ circuit 44-1 and the DCT coefficients of other component than the DC component are supplied to a $DCT^{-1}$ circuit 44-2. The $DCT^{-1}$ circuits 44-1 and 44-2 process DCT coefficients supplied thereto in an inverse DCT fashion. Data, which results from processing the DC component in an inverse DCT fashion, is supplied to the low-pass filter (LPF) 46, in which the high band component is eliminated and only the low band component is permitted to pass. Thereafter, the signal from the LPF 46 and the signal from the $DCT^{-1}$ 44-2 are synthesized by the synthesizer 48 to reproduce the signal that is before being processed in an orthogonal transform fashion. While the transform coefficients are separated into two components as described above, the present invention is not limited thereto and the transform coefficients may be separated into much more components. In that case, although the circuit arrangement becomes complicated, since a band pass filter is required in correspondence with each separated component, the picture quality can be improved.

FIGS. 8A and 8B of the accompanying drawings show a relationship between pixels and transform coefficients. The high-efficiency coding and decoding utilizing the block transform method such as the discrete cosine transform (DCT) or the like employs 8 pixels (in the horizontal direction) and vertical 8 scanning lines as the transform unit block as shown in FIG. 8A, for example. A frequency band that pixels of one block can transmit will be considered. Assuming that fs is a horizontal sampling frequency and that fh is a horizontal scanning line frequency, then, an upper limit frequency in the horizontal direction of one block is represented as fs/2 and an upper limit frequency in the vertical direction is represented as fh/2. On the other hand, in the low band, a mean value of respective pixels of one block is a DC component of one block. Also, upper limit frequencies that can be transmitted by the DC components between adjacent blocks are expressed as $(fs/2) \div 4$ and $(fh/2) \div 4$ in the horizontal and vertical directions, respectively. Frequency factors corresponding to the sampling number within the block are indicated as shown in FIG. 8A. If an image of this one block is processed in a discrete cosine transform fashion, for example, then it is transformed into coefficients shown in FIG. 8B. In the coefficients thus transformed, the coefficient suffixed with (0, 0) represents a DC value within one block.

Referring to FIG. 4, the coefficient representative of the DC component from the separator 42 is processed by the $DCT^{-1}$ circuit 44-1 in an inverse DCT fashion and then filtered out by the two-dimensional LPF 46 having cut-off frequencies of $(fs/2) \div 8$ and $(fh/2) \div 8$. Coefficients corresponding to frequencies other than the DC component are processed by the $DCT^{-1}$ circuit 44-2 in an inverse DCT fashion. The signals from the $DCT^{-1}$ circuit 44-2 and the LPF 46 are synthesized by the synthesizer 48 to obtain a data output of this one block.

Referring back to FIG. 3, the data from the $DCT^{-1}$ circuit 76-1 is developed at a corresponding block position in corresponding block synthesizing circuits 78-i (i = 1 to 3). At that time, if the block size is changed by the block forming circuit 22-i, then data corresponding to the pixel which is selected by the selecting circuit 66 (see FIG. 2) is developed in the block. When the inverse processing of one field/frame is ended, a carrier chrominance signal is reproduced from the amplitude $E_c$ and the phase $\phi$ by a synthesing circuit 80. Further, the luminance signal supplied from synthesizing circuit 78-3 is superimposed upon the carrier chrominance signal by an adder 82. A D/A converter 84 reproduces an analog composite color TV signal from the superimposed signal in response to a clock signal (having the same frequency as that of the clock signal from the clock generator 14) from a clock generator 86.

When the composite color TV signal need not be reproduced, two color signals may be separated from the carrier chrominance signal. Therefore, component signals of the two color signals and the luminance signal can be obtained, thereby displaying a picture.

While the composite color TV signal is effectively transmitted as described above, the present invention is not limited thereto and the code word sequence from the encoding circuit 28 may be recorded on a recording medium, which can improve a recording efficiency. In that case, the code word sequence read out from the recording medium by a head of a drive unit of the recording medium are supplied to the decoding circuit 72 of Fig. 3.

Having described a preferred embodiment of the invention with reference to the accompanying drawings, it is to be understood that the invention is not limited to that precise embodiment and that various changes and modifications could be effected therein by one skilled in the art without departing from the scope of the invention as defined in the appended claims.

## Claims

**1.** A high-efficiency coding system for a composite color video signal, comprising:

generating means (12, 14, 16, 18, 20) for generating luminance values from the luminance signal of the composite colour video signal, and amplitude values and phase values of the carrier chrominance signal of the composite color signal, with respect to each of a plurality of pixels of said composite color video signal;
coefficient generating means (22,24) for processing, respectively, the luminance values, the amplitude values and the phase values of selected pixels within a processing block as a processing unit by performing an orthogonal transform to generate a luminance coefficient set, an amplitude coefficient set and a phase coefficient set; and
encoding means (26,28) for coding said luminance coefficient set, said amplitude coefficient set and said phase coefficient set to generate a code word sequence.

**2.** A system according to claim 1, wherein said generating means (12, 14, 16, 18, 20) comprises:

means (12, 14,16,20) for obtaining said luminance signal and said carrier chrominance signal from said composite color video signal based on a frequency obtained by multiplying a frequency of a color subcarrier signal by a positive integer, p, and determining the luminance values for each pixel from said luminance signal, said plurality of pixels being grouped into groups of p pixels; and
means (18) for determining an amplitude value for each pixel of each group from said carrier chrominance signal of pixels selected from among the pixels within each group and determining a phase value of each pixel of each group based on the determined amplitude and a phase of a phase reference point.

**3.** A system according to claim 1, wherein said generating means (12, 14, 16, 18, 20) comprises:

means (12, 14, 16, 20) for obtaining said luminance signal and said carrier chrominance signal from said composite color video signal based on a frequency obtained by multiplying a frequency of a color subcarrier signal by a positive even integer, q, and determining the luminance value for each pixel from said luminance signal, said plurality of pixels being grouped into groups of q/2 pixels; and
means (18) for determining an amplitude value for each pixel of each group from said carrier chrominance signal of pixels selected from among the pixels within each group and determining a phase value of each pixel of each group based on the determined amplitude and phase of a phase reference point.

**4.** A system according to claim 3, wherein said obtaining means (12, 14, 16, 20) further comprises means for generating an indication signal indicating whether each group of q/2 pixels is a first half or a second half of a group of q pixels, and encoding means (26, 28) further comprises means for encoding the indication signal.

**5.** A system according to any one of the preceding claims, wherein said coefficient generating means (22, 24) includes transform means (24) for processing the luminance values, the amplitude values and the phase values of the selected pixels within a processing block as the processing unit by performing a discrete cosine transform.

**6.** A system according to claim 5, wherein said plurality of pixels are grouped into a plurality of basic blocks, each basic block including a predetermined number of pixels, and said coefficient generating means (22, 24) includes block forming means (22) for selecting each basic block as said processing block.

**7.** A system according to claim 5, wherein said plurality of pixels are grouped into a plurality of basic blocks, each basic block including a predetermined number, n, of pixels, where n is a positive integer, and said coefficient generating means (22, 24) includes block forming means (22) for selecting one or more basic blocks as said processing block.

**8.** A system according to claim 7, wherein said encoding means (26, 28) further comprises means for encoding the number of basic blocks within said processing block.

**9.** A system according to claim 7 or 8, wherein said block forming means (22) comprises means (52 to 66) for selecting, with respect to each of the luminance values, the amplitude values and the phase values, n/m pixels from each of m adjacent basic blocks, where m is a positive integer, within k adjacent basic blocks, where $k \geq m$ and k is a positive integer, based on coefficients obtained by processing each of the k basic blocks by performing a discrete cosine transform, such that the processing block is formed.

**10.** A system according to claim 9, wherein said block forming means (22) comprises:

means (52, 54) for processing each of the k basic blocks by performing a discrete cosine transform, with respect to each of the luminance values, the amplitude values and the phase values, to obtain respective sets of coefficients;
means (54) for summing the obtained coefficients over the k basic blocks for every corresponding frequency component, with respect to each of the luminance values, the amplitude values and the phase values;
means (58, 64) for selecting the m basic blocks as the processing block from among the k basic blocks based on the distribution of where the results of the summing is zero, with respect to each of the luminance values, the amplitude values and the phase values; and
means (66) for selecting n/m pixels from each of the m basic blocks, with respect to each of the luminance values, the amplitude values and the phase values.

**11.** A system for decoding a code word sequence into a composite color video signal comprising:

means (72, 74) for decoding a code word sequence to generate a luminance coefficient set, an amplitude coefficient set and a phase coefficient set, for every processing block as a processing unit;
inverse transform means (76, 78) for processing said luminance coefficient set, said amplitude coefficient set and said phase coefficient set at every predetermined frequency component by performing an inverse orthogonal transform to reproduce luminance values, amplitude values and phase values of selected pixels within a processing block as a processing unit; and
means (80 to 86) for reproducing a composite color video signal from the amplitude values, the phase values and the luminance values for each of a plurality of pixels.

**12.** A system according to claim 11, wherein said inverse transform means (76, 78) comprises:

means (42) for separating the luminance coefficient set, the amplitude coefficient set and the phase coefficient set at every predetermined frequency component, for every processing block;
means (44, 46) for processing the respective separated frequency components of said luminance coefficient set, said amplitude coefficient set and said phase coefficient set by performing an inverse orthogonal transform to reproduce luminance values, amplitude values and phase values, for every processing block; and
means (48) for storing the reproduced luminance values, the reproduced amplitude values and the reproduced phase values for every processing block to reproduce the luminance values, the amplitude values and the phase values for said plurality of pixels.

**13.** A system according to claim 12, wherein one of said separated frequency components is a DC component.

**14.** A communication system employing a high-efficiency coding system of a composite color video signal, comprising:

a transmitting system (2) comprising means for separating a composite color video signal into signals corresponding to a luminance signal and a carrier chrominance signal without demodulating said composite color video signal into component color video signals, a coding system according to any one of claims 1 to 10, and means for transmitting the code word sequence signal through a communication medium; and
a receiving system (4) according to either one of claims 11 or 12 for receiving said code word sequence signal through said communication medium and decoding the same.

**15.** A method of high-efficiency coding a composite color television signal, comprising the steps of:

obtaining a luminance signal, and an amplitude signal and a phase signal representative of a carrier chrominance signal component, from a composite color television signal for each of a plurality of pixels;
processing, respectively, a luminance signal, an amplitude signal and a phase signal for selected pixels within a processing block as a processing unit by performing an orthogonal transform to generate a luminance coefficient set, an amplitude coefficient set and a phase coefficient set; and
encoding said luminance coefficient set, said amplitude coefficient set and said phase coefficient set to generate a code word sequence.

**16.** A method according to claim 15, wherein said step for obtaining signals comprises the steps of:

sampling said composite color television signal at a frequency which is a frequency of a color subcarrier signal multiplied by an integer to obtain said plurality of pixels, said plurality of pixels being grouped into groups of a predetermined number, p, of pixels, p being determined based on said integer;
separating said luminance signal from a signal composed of a plurality of pixels;
determining said amplitude signal corresponding to each pixel within each group from said carrier chrominance signal of pixels within each group; and
determining a phase signal of each pixel of said group based on said carrier chrominance signal of each pixel of each group and the determined amplitude signal, a phase of a reference point which is a phase of a pixel having a remainder of zero in calculation of the number in modulo p when numbers are sequentially allocated to a plurality of pixels.

**17.** A method according to claim 15 or 16, wherein said plurality of pixels are grouped into a plurality of basic blocks, each of said basic blocks includes a predetermined number of pixels and said processing step comprises the steps of selecting the basic block as the processing block to select all pixels of said basic block, and processing the luminance signal, the amplitude signal and a phase signal of selected pixels within said processing block by performing a discrete cosine transform.

**18.** A method according to claim 15 or 16, wherein said plurality of pixels are grouped into a plurality of basic blocks, each of said basic blocks includes a predetermined number, n, of pixels, where n is a positive integer, and said processing step comprises the steps of selecting m adjacent basic blocks, where m is a positive integer, from k basic blocks, where $k \geq m$ and k is a positive integer, based on a characteristic of an image represented by pixels of said k adjacent basic blocks, selecting n pixels, where n is a positive integer, from the pixels of the m basic blocks, and processing the luminance signal, the amplitude signal and the phase signal of the selected pixels within the processing block by performing a discrete cosine transform.

**19.** A method according to claim 18, wherein said step of selecting m basic blocks comprises the steps of:

processing each of said k basic blocks of the image signal by performing a discrete cosine transform to obtain coefficients;
summing the coefficients, provided by said discrete cosine transform, over said k basic blocks at every corresponding frequency component; and
selecting said m basic blocks as the processing block based on the distribution of where the results of the summing is zero.

**20.** A method according to any one of claims 15 to 19, wherein said processing step further comprises the step of encoding the number of basic blocks within the processing block.

**21.** A method for reproducing a composite television signal from a code word sequence comprising the steps of:

decoding a code word sequence to generate a luminance coefficient set, an amplitude coefficient set and a phase coefficient set;
processing said luminance coefficient set, said amplitude coefficient set and said phase coefficient set at every predetermined frequency component by performing an inverse orthogonal transform to reproduce a luminance signal, an amplitude signal and a phase signal for selected pixels within a processing block as a processing unit, one of said predetermined frequency components being a DC component; and
reproducing a composite color television signal from said amplitude signal, said phase signal and said luminance signal for a plurality of pixels.

## Patentansprüche

1. Hocheffizientes Codierungssystem für ein FBAS-Videosignal, mit:

   einer Erzeugungseinrichtung (12, 14, 16, 18, 20) zum Erzeugen von Helligkeitswerten aus dem Helligkeitssignal des FBAS-Videosignals und Amplitudenwerten und Phasenwerten des Trägerfarbsignals des FBAS-Signals in bezug auf jedes von mehreren Pixeln des FBAS-Videosignals;
   einer Koeffizientenerzeugungseinrichtung (22, 24) zum jeweiligen Verarbeiten der Helligkeitswerte, der Amplitudenwerte und der Phasenwerte der ausgewählten Pixel innerhalb eines Verarbeitungsblocks als eine Verarbeitungseinheit mittels Durchführen einer orthogonalen Transformation, um einen Helligkeitskoeffizientensatz, einen Amplitudenkoeffizientensatz und einen Phasenkoeffizientensatz zu erzeugen; und
   einer Codierungseinrichtung (26, 28) zum Codieren des Helligkeitskoeffizientensatzes, des Amplitudenkoeffizientensatzes und des Phasenkoeffizientensatzes, um eine Codewortsequenz zu erzeugen.

2. System nach Anspruch 1, bei dem die Erzeugungseinrichtung (12, 14, 16, 18, 20) umfaßt:

   eine Einrichtung (12, 14, 16, 20) zum Erhalten des Helligkeitssignals und des Farbträgersignals aus dem FBAS-Videosignal auf der Grundlage einer Frequenz, die erhalten wird durch Multiplizieren einer Frequenz eines Farbträgersignals mit einer positiven ganzen Zahl p, und zum Ermitteln der Helligkeitswerte für jedes Pixel aus dem Helligkeitssignal, wobei mehrere Pixel zu Gruppen von p Pixeln zusammengefaßt werden; und
   eine Einrichtung (18) zum Ermitteln eines Amplitudenwerts für jedes Pixel jeder Gruppe aus dem Farbträgersignal der Pixel, die unter den Pixeln innerhalb jeder Gruppe ausgewählt werden, und zum Ermitteln eines Phasenwertes jedes Pixels jeder Gruppe auf der Grundlage der ermittelten Amplitude und einer Phase des Phasenreferenzpunktes.

3. System nach Anspruch 1, bei dem die Erzeugungseinrichtung (12, 14, 16, 18, 20) umfaßt:

   eine Einrichtung (12, 14, 16, 20) zum Erhalten des Helligkeitssignals und des Farbträgersignals aus dem FBAS-Videosignal auf der Grundlage einer Frequenz, die erhalten wird durch Multiplizieren einer Frequenz eines Farbträgersignals mit einer positiven geraden ganzen Zahl q, und zum Ermitteln der Helligkeitswerte für jedes Pixel aus dem Helligkeitssignal, wobei mehrere Pixel zu Gruppen von q/2 Pixeln zusammengefaßt werden; und
   eine Einrichtung (18) zum Ermitteln eines Amplitudenwerts für jedes Pixel jeder Gruppe aus dem Farbträgersignal der Pixel, die unter den Pixeln innerhalb jeder Gruppe ausgewählt werden, und zum Ermitteln eines Phasenwertes jedes Pixels jeder Gruppe auf der Grundlage der ermittelten Amplitude und einer Phase des Phasenreferenzpunktes.

4. System nach Anspruch 3, bei dem die Ermittlungseinrichtung (12, 14, 16, 20) ferner eine Einrichtung umfaßt zum Erzeugen eines Anzeigesignals, das anzeigt, ob jede Gruppe von q/2 Pixeln eine erste Hälfte oder eine zweite Hälfte einer Gruppe von q Pixeln ist, und die Codierungseinrichtung (26, 28) ferner eine Einrichtung zum Codieren des Anzeigesignals umfaßt.

5. System nach irgendeinem der vorangehenden Ansprüche, bei dem die Koeffizientenerzeugungseinrichtung (22, 24) eine Transformationseinrichtung (24) enthält zum Verarbeiten der Helligkeitswerte, der Amplitudenwerte und der Phasenwerte der ausgewählten Pixel innerhalb eines Verarbeitungsblocks als Verarbeitungseinheit mittels Durchführen einer diskreten Cosinustransformation.

6. System nach Anspruch 5, bei dem mehrere Pixel zu mehreren Basisblöcken zusammengefaßt werden, wobei jeder Basisblock eine vorgegebene Anzahl von Pixeln enthält, und wobei die Koeffizientenerzeugungseinrichtung (22, 24) eine Blockbildungseinrichtung (22) zum Auswählen jedes Basisblocks als Verarbeitungsblock enthält.

7. System nach Anspruch 5, bei dem mehrere Pixel zu mehreren Basisblöcken zusammengefaßt werden, wobei jeder Basisblock eine vorgegebene Anzahl n von Pixeln enthält, wobei n eine positive ganze Zahl ist, und wobei die Koeffizientenerzeugungseinrichtung (22, 24) eine Blockbildungseinrichtung (22) zum Auswählen eines oder mehrerer Basisblöcke als Verarbeitungsblock enthält.

**8.** System nach Anspruch 7, bei dem die Codierungseinrichtung (26, 28) ferner eine Einrichtung enthält zum Codieren der Anzahl der Basisblöcke innerhalb des Verarbeitungsblocks.

**9.** System nach Anspruch 7 oder 8, bei dem die Blockbildungseinrichtung (22) eine Einrichtung (52 bis 66) enthält, die bezüglich aller Helligkeitswerte, Amplitudenwerte und Phasenwerte aus jedem von m benachbarten Basisblöcken n/m Pixel auswählt, wobei m eine positive ganze Zahl ist, innerhalb von k benachbarten Basisblökken, wobei k ≥ m und k eine positive ganze Zahl ist, auf der Grundlage der Koeffizienten, die durch die Verarbeitung aller k Basisblöcke erhalten werden, indem eine diskrete Cosinustransformation durchgeführt wird, so daß der Verarbeitungsblock gebildet wird.

**10.** System nach Anspruch 9, bei dem die Blockbildungseinrichtung (22) umfaßt:

eine Einrichtung (52, 54) zum Verarbeiten aller k Basisblöcke, in dem eine diskrete Cosinustransformation bezüglich aller Helligkeitswerte, Amplitudenwerte und Phasenwerte durchgeführt wird, um entsprechende Sätze von Koeffizienten zu erhalten;
eine Einrichtung (54) zum Summieren der erhaltenen Koeffizienten über die k Basisblöcke für jede entsprechende Frequenzkomponente bezüglich aller Helligkeitswerte, Amplitudenwerte und Phasenwerte;
eine Einrichtung (58, 64) zum Auswählen der m Basisblöcke als den Verarbeitungsblock unter den k Basisblöcken auf der Grundlage der Verteilung, bei der die Ergebnisse der Summierung gleich 0 sind, bezüglich aller Helligkeitswerte, Amplitudenwerte und Phasenwerte; und
eine Einrichtung (66) zum Auswählen von n/m Pixeln aus allen m Basisblöcken bezüglich aller Helligkeitswerte, Amplitudenwerte und Phasenwerte.

**11.** System zum Decodieren einer Codewortsequenz in ein FBAS-Videosignal, mit:

einer Einrichtung (72, 74) zum Decodieren einer Codewortsequenz, um einen Helligkeitskoeffizientensatz, einen Amplitudenkoeffizientensatz und einen Phasenkoeffizientensatz für jeden Verarbeitungsblock als Verarbeitungseinheit zu erhalten;
einer Invers-Transformationseinrichtung (76, 78) zum Verarbeiten des Helligkeitskoeffizientensatzes, des Amplitudenkoeffizientensatzes und des Phasenkoeffizientensatzes bei jeder vorgegebenen Frequenzkomponente mittels Durchführen einer inversen orthogonalen Transformation, um Helligkeitswerte, Amplitudenwerte und Phasenwerte der ausgewählten Pixel innerhalb eines Verarbeitungsblocks als Verarbeitungseinheit zu reproduzieren; und
einer Einrichtung (80 bis 86) zum Reproduzieren eines FBAS-Videosignals aus den Amplitudenwerten, den Phasenwerten und den Helligkeitswerten für jedes der mehreren Pixel.

**12.** System nach Anspruch 11, bei dem die Invers-Transformationseinrichtung (76, 78) umfaßt:

eine Einrichtung (42) zum Trennen des Helligkeitskoeffizientensatzes, des Amplitudenkoeffizientensatzes und des Phasenkoeffizientensatzes bei jeder vorgegebenen Frequenzkomponente für jeden Verarbeitungsblock;
eine Einrichtung (44, 46) zum Verarbeiten der jeweiligen getrennten Frequenzkomponenten des Helligkeitskoeffizientensatzes, des Amplitudenkoeffizientensatzes und des Phasenkoeffizientensatzes mittels Durchführen einer inversen orthogonalen Transformation, um Helligkeitswerte, Amplitudenwerte und Phasenwerte für jeden Verarbeitungsblock zu erzeugen; und
eine Einrichtung (48) zum Speichern der reproduzierten Helligkeitswerte, der reproduzierten Amplitudenwerte und der reproduzierten Phasenwerte für jeden Verarbeitungsblock, um die Helligkeitswerte, die Amplitudenwerte und die Phasenwerte für die mehreren Pixel zu reproduzieren.

**13.** System nach Anspruch 12, bei dem eine der separaten Frequenzkomponenten eine Gleichspannungskomponente ist.

**14.** Kommunikationssystem, das ein hocheffizientes Codierungssystem eines FBAS-Videosignals verwendet, mit:

einem Sendesystem (2), das versehen ist mit einer Einrichtung zum Trennen eines FBAS-Videosignals in Signale, die einem Helligkeitssignal und einem Farbträgersignal entsprechen, ohne Demodulieren des FBAS-Videosignals in Komponentenfarbvideosignale, einem Codierungssystem gemäß irgendeinem der Ansprüche 1 bis 10 sowie einer Einrichtung zum Senden des Codewortsequenzsignals über ein Kommunikationsmedium; und

einem Empfangssystem (4) gemäß einem der Ansprüche 11 oder 12 zum Empfangen des Codewortsequenzsignals über das Kommunikationsmedium und zum Decodieren desselben.

**15.** Verfahren zum hocheffizienten Codieren eines FBAS-Fernsehsignals, das die Schritte umfaßt:

Erhalten eines Helligkeitssignals, eines Amplitudensignals und eines Phasensignals, die eine Farbträgersignalkomponente darstellen, aus einem FBAS- Fernsehsignal für jedes von mehreren Pixeln;
Verarbeiten jeweils eines Helligkeitssignals, eines Amplitudensignals und eines Phasensignals für ausgewählte Pixel innerhalb eines Verarbeitungsblocks als eine Verarbeitungseinheit mittels Durchführen einer orthogonalen Transformation, um einen Helligkeitskoeffizientensatz, einen Amplitudenkoeffizientensatz und einen Phasenkoeffizientensatz zu erzeugen; und
Codieren des Helligkeitskoeffizientensatzes, des Amplitudenkoeffizientensatzes und des Phasenkoeffizientensatzes, um eine Codewortsequenz zu erzeugen.

**16.** Verfahren nach Anspruch 15, bei dem der Schritt zum Erhalten der Signale die Schritte umfaßt:

Abtasten des FBAS-Fernsehsignals mit einer Frequenz, die gleich einer Frequenz eines Farbträgersignals multipliziert mit einer ganzen Zahl ist, um mehrere Pixel zu erhalten, die in Gruppen einer vorgegebenen Anzahl p von Pixeln gruppiert sind, wobei p auf der Grundlage der ganzen Zahl ermittelt wird;
Trennen des Helligkeitssignals von einem Signal, das aus mehreren Pixeln besteht;
Ermitteln des Amplitudensignals, das den jeweiligen Pixeln innerhalb jeder Gruppe entspricht, aus dem Farbträgersignal der Pixel innerhalb jeder Gruppe; und
Ermitteln eines Phasensignals jedes Pixels der Gruppe auf der Grundlage des Farbträgersignals jedes Pixels jeder Gruppe und des ermittelten Amplitudensignals, einer Phase eines Referenzpunktes, die eine Phase eines Pixels mit einem Rest 0 in der Berechnung der Anzahl modulo p ist, wenn die Zahlen sequentiell mehreren Pixeln zugewiesen sind.

**17.** Verfahren nach Anspruch 15 oder 16, bei dem mehrere Pixel zu mehreren Basisblöcken gruppiert sind, die jeweils eine vorgegebene Anzahl von Pixeln enthalten, wobei der Verarbeitungsschritt versehen ist mit den Schritten des Auswählens des Basisblockes als den Verarbeitungsblock, um alle Pixel des Basisblocks auszuwählen, und des Verarbeitens des Helligkeitssignals, des Amplitudensignals und eines Phasensignals der ausgewählten Pixel innerhalb des Verarbeitungsblocks mittels Durchführen einer diskreten Cosinustransformation.

**18.** Verfahren nach Anspruch 15 oder 16, bei dem mehrere Pixel zu mehreren Basisblöcken gruppiert sind, die jeweils eine vorgegebene Anzahl n von Pixeln enthalten, wobei n eine positive ganze Zahl ist, und wobei der Verarbeitungsschritt versehen ist mit den Schritten des Auswählens von m benachbarten Basisblöcken, wobei m eine positive ganze Zahl ist, aus k Basisblöcken, wobei $k \geq m$ und k eine positive ganze Zahl ist, auf der Grundlage einer Eigenschaft eines durch die Pixel der k benachbarten Blöcke dargestellten Bildes, des Auswählens von n Pixeln, wobei n eine positive ganze Zahl ist, aus den Pixeln der m Basisblöcke, und des Verarbeitens des Helligkeitssignals, des Amplitudensignals und des Phasensignals der ausgewählten Pixel innerhalb des Verarbeitungsblocks mittels Durchführen einer diskreten Cosinustransformation.

**19.** Verfahren nach Anspruch 18, bei dem der Schritt des Auswählens der m Basisblöcke die Schritte umfaßt:

Verarbeiten jedes der k Basisblöcke des Bildsignals mittels Durchführen einer diskreten Cosinustransformation, um Koeffizienten zu erhalten;
Summieren der Koeffizienten, die von der diskreten Cosinustransformation geliefert werden, über k Basisblöcke bei jeder entsprechenden Frequenzkomponente; und
Auswählen von m Basisblöcken als den Verarbeitungsblock auf der Grundlage der Verteilung, bei der die Ergebnisse der Summierung gleich 0 sind.

**20.** Verfahren nach irgendeinem der Ansprüche 15 bis 19, bei dem der Verarbeitungsschritt ferner den Schritt des Codierens der Anzahl der Basisblöcke innerhalb des Verarbeitungsblocks umfaßt.

**21.** Verfahren zum Reproduzieren eines FBAS-Fernsehsignals aus einer Codewortsequenz, mit den Schritten:

Decodieren einer Codewortsequenz, um einen Helligkeitskoeffizientensatz, einen Amplitudenkoeffizientensatz und einen Phasenkoeffizientensatz zu erhalten;

Verarbeiten des Helligkeitskoeffizientensatzes, des Amplitudenkoeffizientensatzes und des Phasenkoeffizientensatzes bei jeder vorgegebenen Frequenzkomponente mittels Durchführen einer inversen orthogonalen Transformation, um ein Helligkeitssignal, ein Amplitudensignal und ein Phasensignal für die ausgewählten Pixel innerhalb eines Verarbeitungsblocks als Verarbeitungseinheit zu reproduzieren, wobei eine der vorgegebenen Frequenzkomponenten eine Gleichspannungskomponente ist; und
Reproduzieren eines FBAS-Fernsehsignals aus dem Amplitudensignal, dem Phasensignal und dem Helligkeitssignal für mehrere Pixel.

**Revendications**

**1.** Système de codage à haute efficacité pour un signal vidéo couleur composite, comprenant:

des moyens (12, 14, 16, 18 , 20) destinés à générer des valeurs de luminance à partir du signal de luminance du signal vidéo couleur composite, et des valeurs d'amplitude ainsi que des valeurs de phase du signal de chrominance de porteuse du signal couleur composite, en ce qui concerne chaque pixel d'une pluralité de pixels dudit signal vidéo couleur composite;
des moyens (22, 24) de génération de coefficients destinés à traiter, respectivement, les valeurs de luminance, les valeurs d'amplitude et les valeurs de phase de pixels sélectionnés dans un bloc de traitement en tant qu'unité de traitement, en effectuant une transformée orthogonale de manière à générer un ensemble de coefficients de luminance, un ensemble de coefficients d'amplitude et un ensemble de coefficients de phase; et
des moyens de codage (26, 28) destinés à coder ledit ensemble de coefficients de luminance, ledit ensemble de coefficients d'amplitude et ledit ensemble de coefficients de phase de manière à générer une séquence de mots de code.

**2.** Système selon la revendication 1, dans lequel lesdits moyens de génération (12, 14, 16, 18, 20) comprennent:

des moyens (12, 14, 16, 20) destinés à obtenir ledit signal de luminance et ledit signal de chrominance de porteuse à partir dudit signal vidéo couleur composite en se basant sur une fréquence obtenue par multiplication d'une fréquence d'un signal de sous-porteuse couleur par un nombre entier positif p, et à déterminer les valeurs de luminance pour chaque pixel à partir dudit signal de luminance, les pixels de ladite pluralité de pixels étant groupés en groupes de p pixels; et
un moyen (18) destiné à déterminer une valeur d'amplitude pour chaque pixel de chaque groupe à partir dudit signal de chrominance de porteuse des pixels sélectionnés parmi les pixels dans chaque groupe et à déterminer une valeur de phase de chaque pixel de chaque groupe en se basant sur l'amplitude déterminée et une phase d'un point de référence de phase.

**3.** Système selon la revendication 1, dans lequel lesdits moyens de génération (12, 14, 16, 18, 20) comprennent:

des moyens (12, 14, 16, 20) destinés à obtenir ledit signal de luminance et ledit signal de chrominance de porteuse à partir dudit signal vidéo couleur composite en se basant sur une fréquence obtenue par multiplication d'un fréquence d'un signal de sous-porteuse couleur par un nombre entier pair positif q, et à déterminer la valeur de luminance pour chaque pixel à partir dudit signal de luminance, les pixels de ladite pluralité de pixels étant groupés en groupes de q/2 pixels; et
un moyen (18) destiné à déterminer une valeur d'amplitude pour chaque pixel de chaque groupe à partir dudit signal de chrominance de porteuse des pixels sélectionnés parmi les pixels de chaque groupe et à déterminer une valeur de phase de chaque pixel dans chaque groupe en se basant sur l'amplitude déterminée et une phase d'un point de référence de phase.

**4.** Système selon la revendication 3, dans lequel lesdits moyens (12, 14, 16, 20) comprennent, en outre, des moyens destinés à générer un signal d'indication indiquant si oui ou non chaque groupe de q/2 pixels est une première moitié ou une seconde moitié d'un groupe de q pixels, et les moyens de codage (26, 28) comprennent, en outre, des moyens pour coder le signal d'indication.

**5.** Système selon l'une quelconque des revendications précédentes, dans lequel lesdits moyens (22, 24) de génération de ci)efficients comprennent un moyen (24) pour effectuer une transformée, destiné à traiter les valeurs de luminance, les valeurs d'amplitude et les valeurs de phase des pixels sélectionnés, dans un bloc de traitement en tant qu'unité de traitement par calcul d'une transformée de cosinus discrète.

6. Système selon la revendication 5, dans lequel les pixels de ladite pluralité de pixels sont groupés en une pluralité de blocs de base, chaque bloc de base comprenant un nombre prédéterminé de pixels, et lesdits moyen (22, 24) de génération de coefficients comprennent un moyen (22) de formation de blocs destiné à sélectionner chaque bloc de base en tant que bloc de traitement précité.

7. Système selon la revendication 5, dans lequel les pixels de ladite pluralité de pixels sont groupés en une pluralité de blocs de base, chaque bloc de base comprenant un nombre prédéterminé n de pixels, sachant que n est un nombre entier positif, et lesdits moyens (22, 24) de génération de coefficients comprennent un moyen (22) de formation de blocs destiné à sélectionner un ou plusieurs blocs de base en tant que bloc de traitement précité.

8. Système selon la revendication 7, dans lequel lesdits moyens de codage (26, 28) comprennent des moyens destinés à coder le nombre de blocs de base dans ledit bloc de traitement.

9. Système selon la revendication 7 ou 8, dans lequel ledit moyen (22) de formation de blocs comprend des moyens (52 à 66) destinés à sélectionner, en ce qui concerne chacune des valeurs de luminance, des valeurs d'amplitude et des valeurs de phase, n/m pixels à partir de chacun des m blocs de base adjacents, sachant que m est un nombre entier positif, dans k blocs de base adjacents, sachant que $k \geq m$ et k est un nombre entier positif, en se basant sur des coefficients obtenus par traitement de chacun des k blocs de base en effectuant une transformée de cosinus discrète, de telle sorte que le bloc de traitement se trouve formé.

10. Système selon la revendication 9, dans lequel ledit moyen (22) de formation de blocs comprend:

des moyens (52, 54) destinés à traiter chacun des k blocs de base en effectuant une transformée de cosinus discrète, en ce qui concerne chacune des valeurs de luminance, des valeurs d'amplitude et des valeurs de phase de manière à obtenir des ensembles respectifs de coefficients;
un moyen (54) destiné à faire la somme des coefficients obtenus sur le k blocs de base pour chaque composante de fréquence correspondante, en ce qui concerne chacune des valeurs de luminance, des valeurs d'amplitude et des valeurs de phase;
de moyens (58, 64) destinés à sélectionner les m blocs de base en tant que bloc de traitement parmi le k blocs de base en se basant sur la distribution de l'endroit où le résultat de la sommation est nul, en ce qui concerne chacune des valeurs de luminance, des valeurs d'amplitude et des valeurs de phase; et
un moyen (66) destiné à sélectionner n/m pixels à partir de chacun des m blocs de base, en ce qui concerne chacune des valeurs de luminance, des valeurs d'amplitude et des valeurs de phase.

11. Système de décodage d'une séquence de mots de code en un signal vidéo couleur composite comprenant:

des moyens (72, 74) destinés à décoder une séquence de mots de code pour générer un ensemble de coefficients de luminance, un ensemble de coefficients d'amplitude et un ensemble de coefficients de phase, pour chaque bloc de traitement en tant qu'unité de traitement;
des moyens (76, 78) pour effectuer une transformée inverse, destinés à traiter ledit ensemble de coefficients de luminance, ledit ensemble de coefficients d'amplitude et ledit ensemble de coefficients de phase à chaque composante de fréquence prédéterminée en effectant une transformée orthogonale inverse pour reproduire les valeurs de luminance, les valeurs d'amplitude et les valeurs de phase de pixels sélectionnés dans un bloc de traitement en tant qu'unité de traitement; et
des moyens (80 à 86) destinés à reproduire un signal vidéo couleur composite à partir des valeurs d'amplitude, des valeurs de phase et des valeurs de luminance pour chaque pixel d'une pluralité de pixels.

12. Système selon la revendication 11, dans lequel lesdits moyens (76, 78) destinés à effectuer une transformée inverse comprennent:

un moyen (42) destiné à séparer l'ensemble de coefficients de luminance, l'ensemble de coefficients d'amplitude et l'ensemble de coefficients de phase à chaque composante de fréquence prédéterminée, pour chaque bloc de traitement:
des moyens (44, 46) destinés à traiter les composantes de fréquence séparées respectives dudit ensemble de coefficients de luminance, dudit ensemble de coefficients d'amplitude et dudit ensemble de coefficients de phase en effectuant une transformée orthogonale inverse pour reproduire des valeurs de luminance, des valeurs d'amplitude et des valeurs de phase pour chaque bloc de traitement; et
un moyen (48) destiné à stocker les valeurs de luminance reproduites, les valeurs d'amplitude reproduites et les valeurs de phase reproduites pour chaque bloc de traitement afin de reproduire les valeurs de luminance, les valeurs d'amplitude et les valeurs de phase pour ladite pluralité de pixels.

**13.** Système selon la revendication 12, dans lequel une desdites composantes de fréquence séparées est une composante en courant continu.

**14.** Système de communication utilisant un système de codage de haute efficacité pour coder un signal vidéo couleur composite, comprenant:

un système de transmission (2) comprenant des moyens destinés à séparer un signal vidéo couleur composite en signaux correspondant à un signal de luminance et à un signal de chrominance de porteuse sans démoduler ledit signal vidéo couleur composite en signaux vidéo couleur de composante, un système de codage selon l'une quelconque des revendications 1 à 10, et un moyen destiné à transmettre le signal de séquences de mots de code par l'intermédiaire d'un moyen de communication; et
un système de réception (4) selon l'une ou l'autre des revendication 11 ou 12, destiné à recevoir ledit signal de séquences de mots de code par l'intermédiaire dudit moyen de communication et à décoder ce signal.

**15.** Procédé de codage à haute efficacité d'un signal composite de télévision en couleur, comprenant les étapes consistant :

à obtenir un signal de luminance, et un signal d'amplitude ainsi qu'un signal de phase représentatif d'une composante de signal de chrominance de porteuse à partir d'un signal composite de télévision en couleur pour chaque pixel d'une pluralité de pixels;
à traiter, respectivement, un signal de luminance, un signal d'amplitude et un signal de phase pour des pixels sélectionnés, dans un bloc de traitement en tant qu'unité de traitement, en effectuant une transformée orthogonale pour générer un ensemble de coefficients de luminance, un ensemble de coefficients d'amplitude et un ensemble de coefficients de phase; et
à coder ledit ensemble de coefficients de luminance, ledit ensemble de coefficients d'amplitude et ledit ensemble de coefficients de phase pour générer une séquence de mots de code.

**16.** Procédé selon la revendication 15, dans lequel ladite étape d'obtention de signaux comprend les étapes consistant:

à échantillonner ledit signal composite de télévision en couleur à une fréquence qui est une fréquence d'un signal de sous-porteuse couleur multiplié par un nombre entier pour obtenir ladite pluralité de pixels, les pixels de ladite pluralité de pixels étant groupés en groupe d'un nombre prédéterminé p de pixels, p étant déterminé sur la base dudit nombre entier;
à séparer ledit signal de luminance d'un signal composé d'une pluralité de pixels;
à déterminer ledit signal d'amplitude correspondant à chaque pixel dans chaque groupe à partir dudit signal de chrominance de porteuse de pixels dans chaque groupe; et
à déterminer un signal de phase de chaque pixel dudit groupe en se basant sur ledit signal de chrominance de porteuse de chaque pixel de chaque groupe et sur le signal d'amplitude déterminé, une phase d'un point de référence qui est une phase d'un pixel présentant un reste nul dans le calcul du nombre modulo p quand des nombres sont attribués de façon séquentielle à une pluralité de pixels;

**17.** Procédé selon la revendication 15 ou 16, dans lequel les pixels de ladite puralité de pixels sont groupés en une pluralité de blocs de base, chacun desdits blocs de base comprend un nombre prédéterminé de pixels et ladite étape de traitement comprend les étapes consistant à sélectionner le bloc de base, en tant que bloc de traitement, pour sélectionner tous les pixels dudit bloc de base, et à traiter le signal de luminance, le signal d'amplitude et un signal de phase des pixels sélectionnés dans ledit bloc de traitement en effectuant une transformée de cosinus discrète.

**18.** Procédé selon la revendication 15 ou 16, dans lequel les pixels de ladite pluralité de pixels sont groupés en une pluralité de blocs de base, chacun desdits blocs de base comprend un nombre prédéterminé n de pixels, sachant que n est un nombre entier positif, et ladite étape de traitement comprend les étapes consistant à sélectionner m blocs de base adjacents, sachant que m est un nombre entier positif, parmi k blocs de base, sachant que $k \geq m$ et k et un nombre entier positif, en se basant sur une caractéristique d'une image représentée par les pixels desdits k blocs de base adjacents, à sélectionner n pixels, sachant que n est un nombre entier positif, parmi les pixels des m blocs de base, et à traiter le signal de luminance, le signal d'amplitude et le signal de phase des pixels sélectionnés dans le bloc de traitement en effectuant une transformée de cosinus discrète.

**19.** Procédé selon la revendication 18, dans lequel ladite étape de sélection de m blocs de base comprend les étapes consistant:

à traiter chacun desdits k blocs de base du signal d'image en effectuant une transformée de cosinus discrète pour obtenir des coefficients;
à faire la somme des coefficients, fournis par ladite transformée de cosinus discrète, sur lesdits k blocs de base à chaque composante de fréquence correspondante; et
à sélectionner lesdits m blocs de base en tant que blocs de traitement en se basant sur la distribution de l'endroit où le résultat de la sommation est nul.

**20.** Procédé selon l'une quelconque des revendications 15 à 19 dans lequel ladite étape de traitement comprend, en outre, l'étape de codage du nombre de blocs de base dans le bloc de traitement.

**21.** Procédé de reproduction d'un signal de télévision composite à partir d'une séquence de mots de code, comprenant les étapes consistant:

à décoder une séquence de mots de code pour générer un ensemble de coefficients de luminance, un ensemble de coefficients d'amplitude et un ensemble de coefficients de phase;
à traiter ledit ensemble de coefficients de luminance, ledit ensemble de coefficients d'amplitude et ledit ensemble de coefficients de phase à chaque composante de fréquence prédéterminée en effectuant une transformée orthogonale pour reproduire un signal de luminance, un signal d'amplitude et un signal de phase afin de sélectionner des pixels dans un bloc de traitement en tant qu'unité de traitement, une desdites composantes de fréquence prédéterminées étant une composante en courant continu; et
à reproduire un signal composite de télévision en couleur à partir dudit signal d'amplitude, dudit signal de phase et dudit signal de luminance pour une pluralité de pixels.

FIG. 1

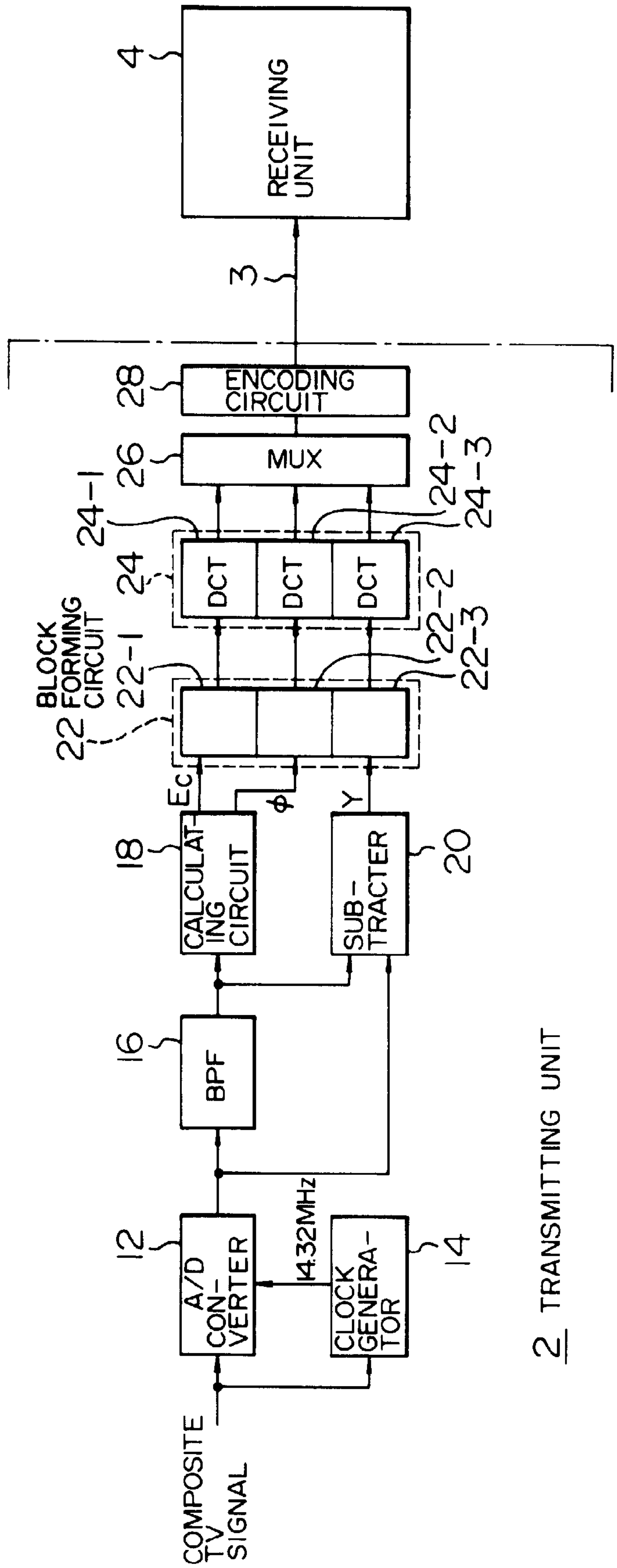
COMPOSITE TV SIGNAL
A/D CON-VERTER
12
CLOCK GENERA-TOR
14
14.32MHz
BPF
16
CALCULAT-ING CIRCUIT
18
SUB-TRACTER
20
Ec
φ
Y
BLOCK FORMING CIRCUIT
22
22-1
22-2
22-3
DCT
DCT
DCT
24
24-1
24-2
24-3
MUX
26
ENCODING CIRCUIT
28
3
RECEIVING UNIT
4
2 TRANSMITTING UNIT

FIG. 2

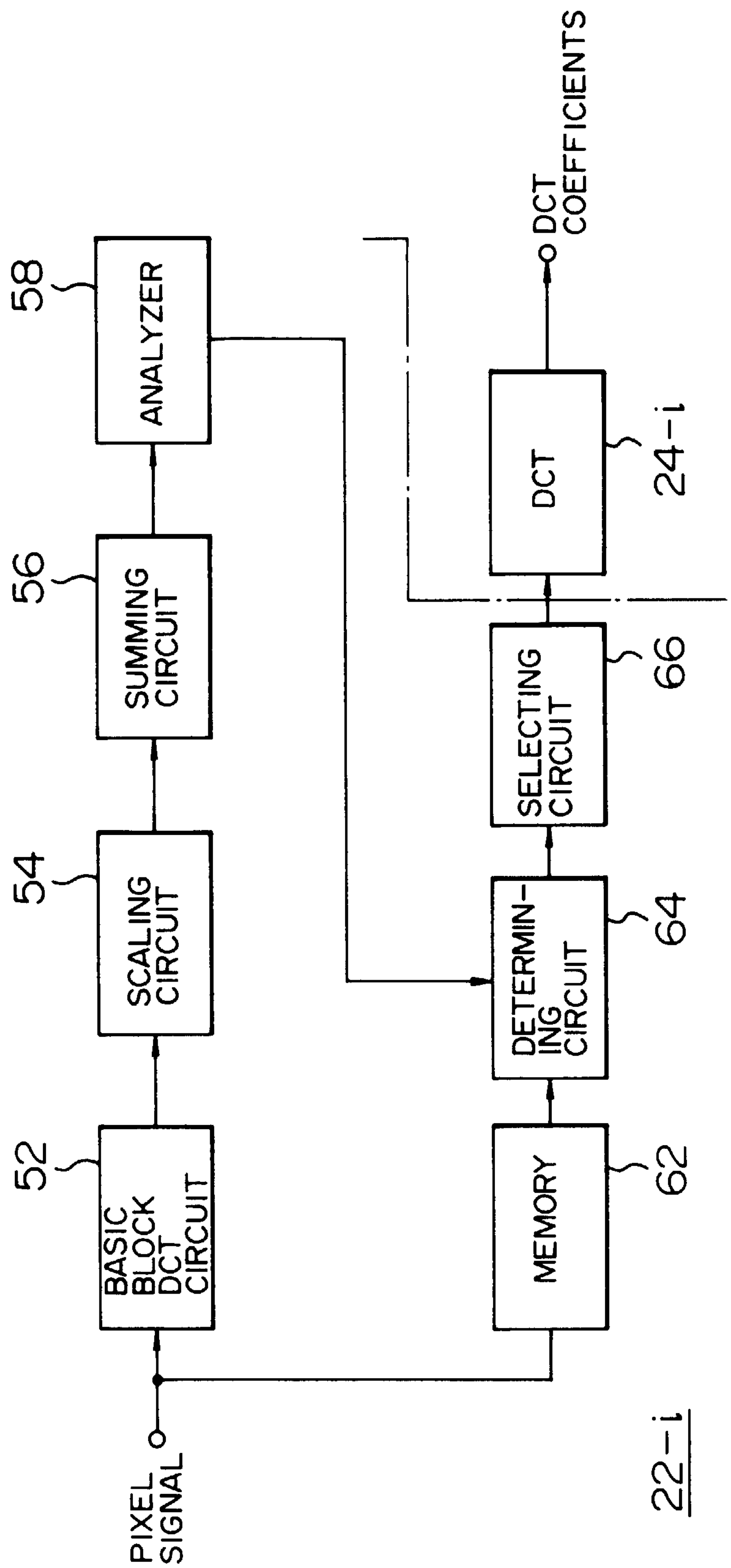
PIXEL SIGNAL
BASIC BLOCK DCT CIRCUIT
52
SCALING CIRCUIT
54
SUMMING CIRCUIT
56
ANALYZER
58
MEMORY
62
DETERMIN-ING CIRCUIT
64
SELECTING CIRCUIT
66
DCT
24-i
DCT COEFFICIENTS
22-i

FIG. 3

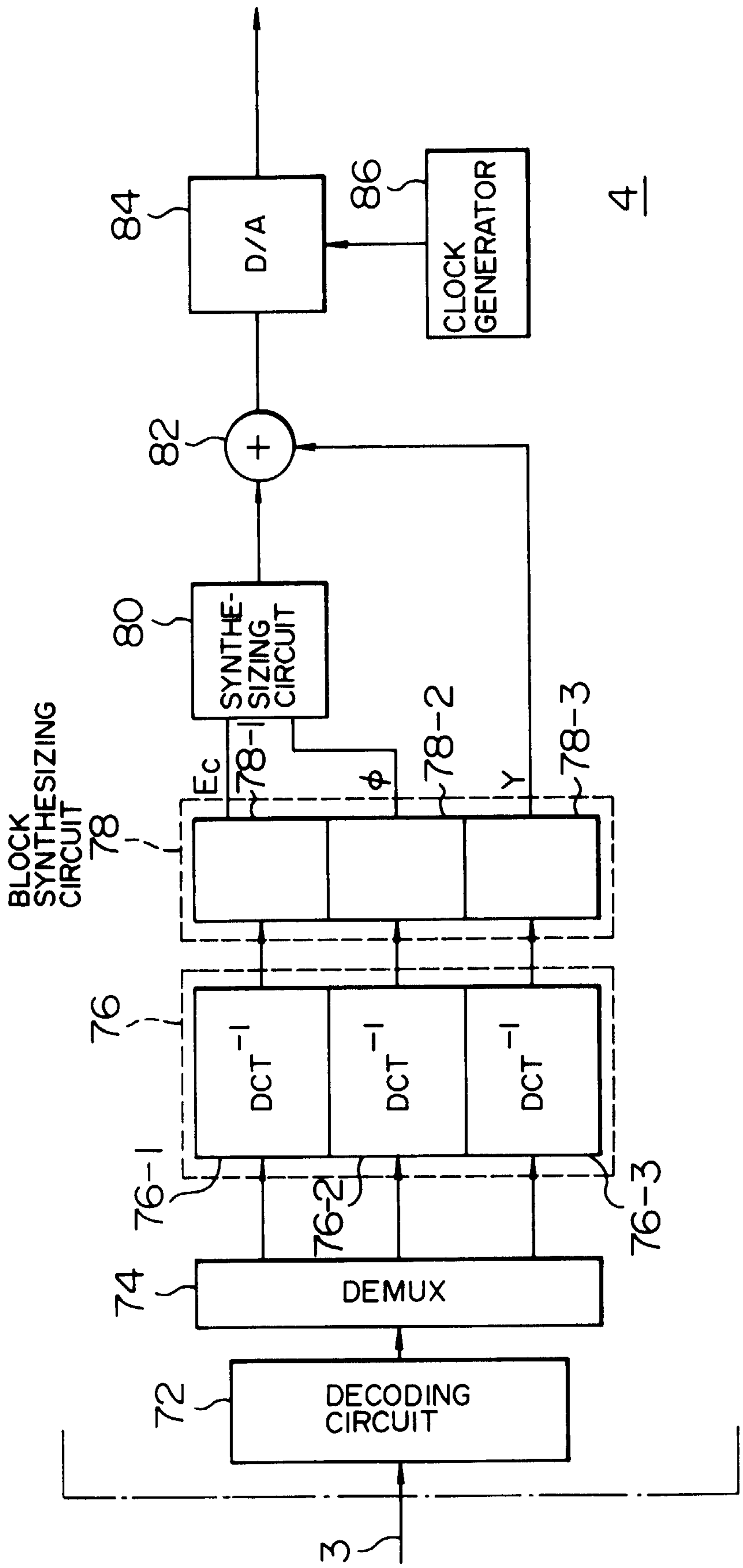
BLOCK SYNTHESIZING CIRCUIT
78
3
72
DECODING CIRCUIT
74
DEMUX
76
76-1
76-2
76-3
$DCT^{-1}$
$DCT^{-1}$
$DCT^{-1}$
78-1
78-2
78-3
Ec
φ
Y
80
SYNTHE-SIZING CIRCUIT
82
+
84
D/A
86
CLOCK GENERATOR
4

FIG. 4

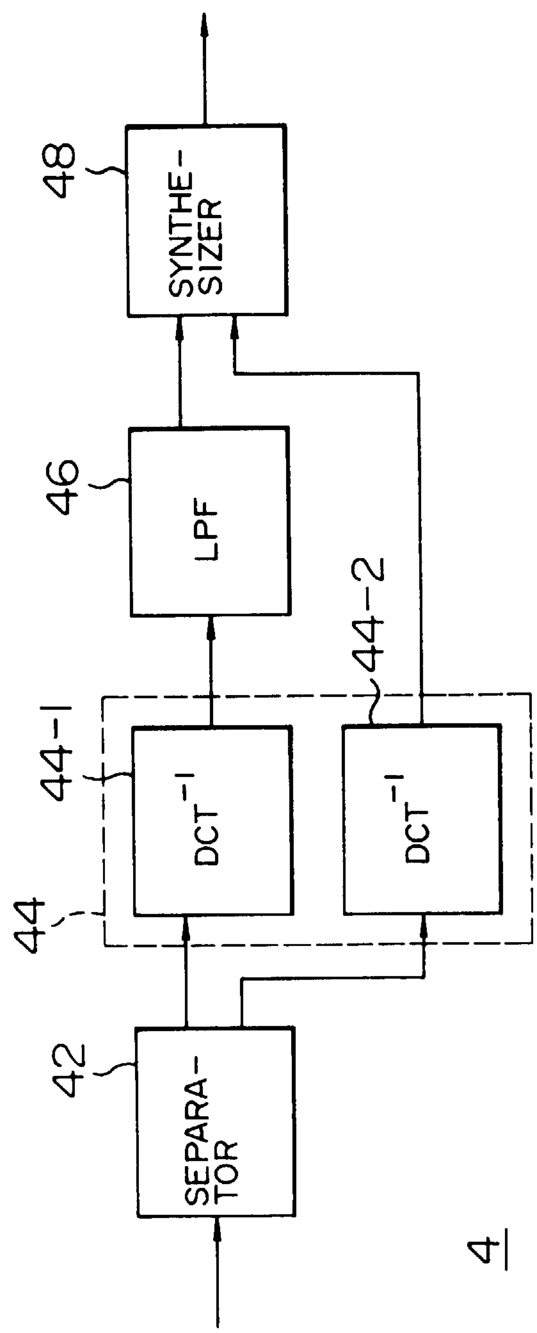

FIG. 5A

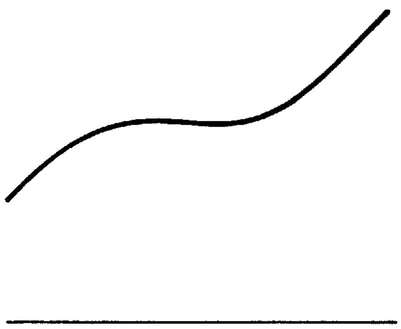

FIG. 5B

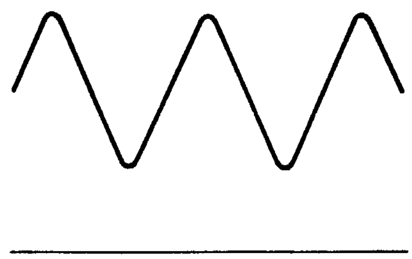

FIG. 5C

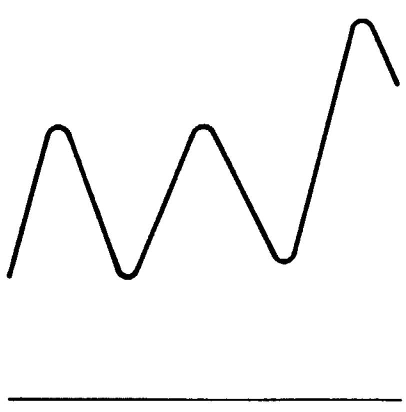

FIG. 6

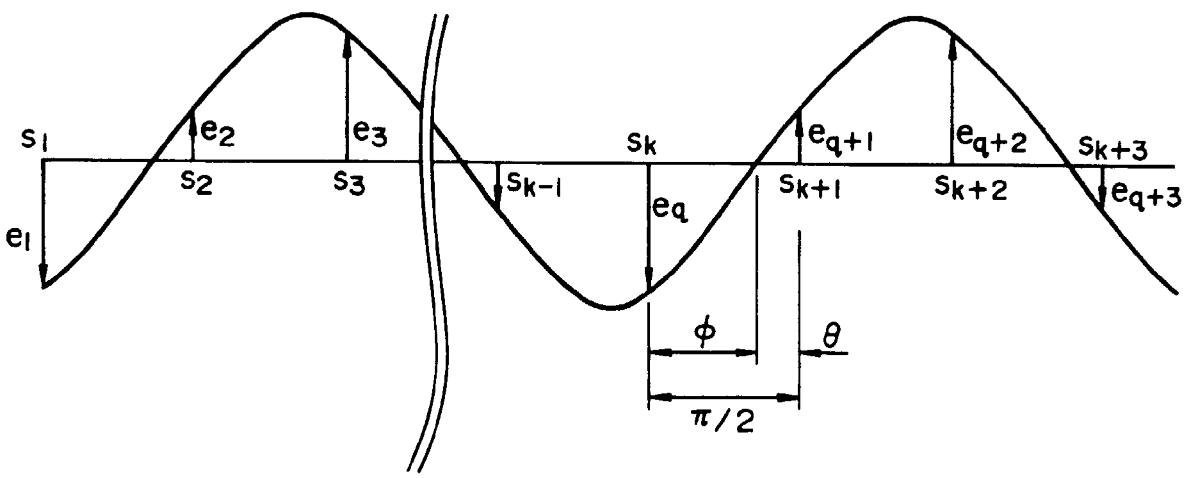

F I G. 7A

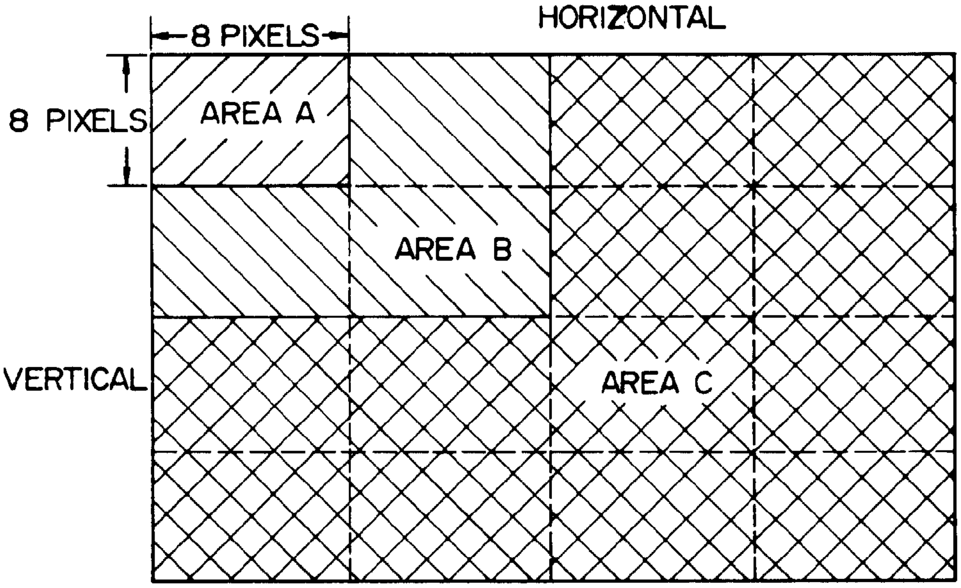
8 PIXELS
HORIZONTAL
8 PIXELS
AREA A
AREA B
VERTICAL
AREA C

F I G. 7B

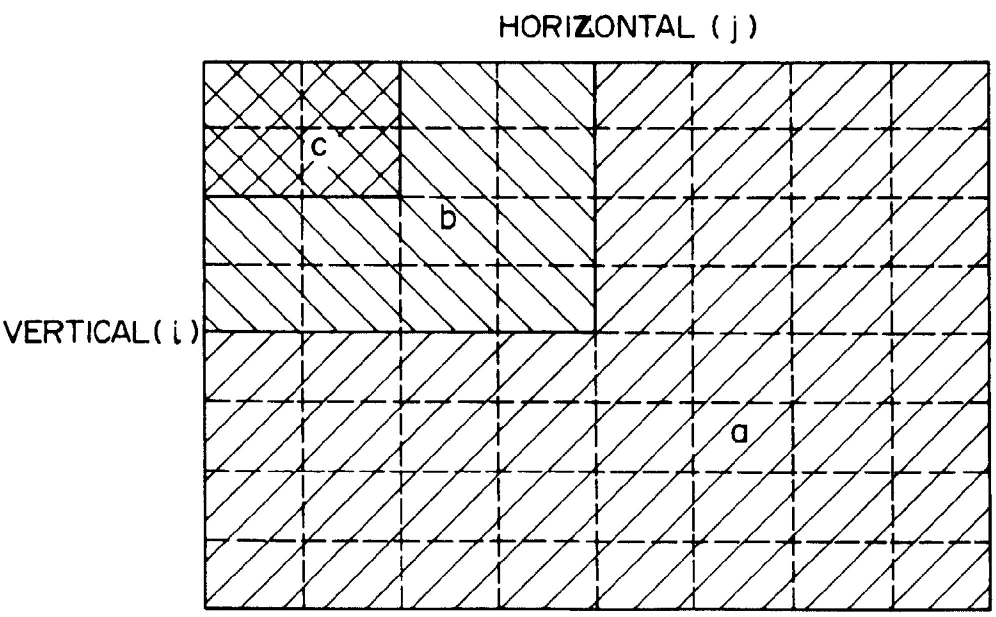
HORIZONTAL ( j )
VERTICAL ( i )
c
b
a

FIG. 8A

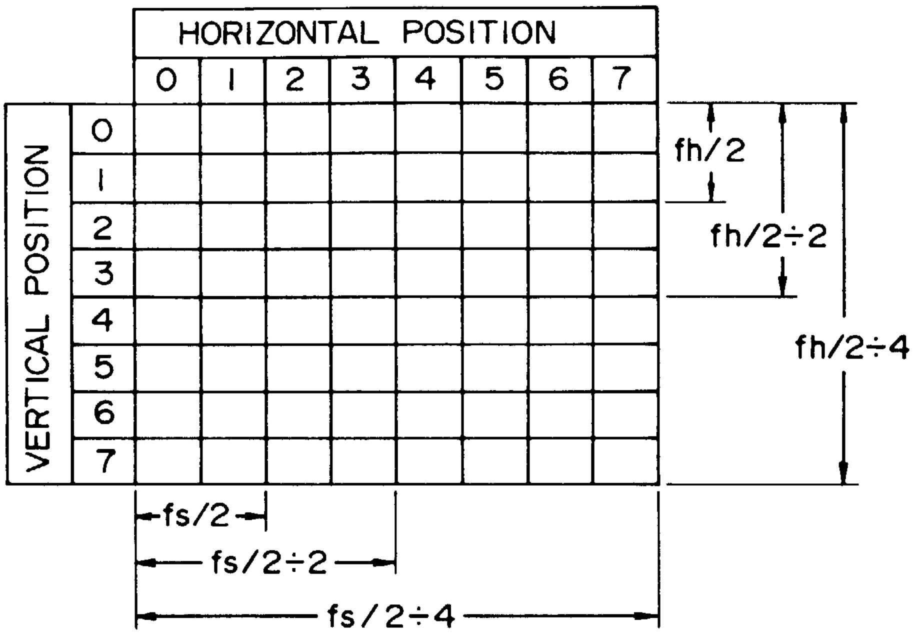
HORIZONTAL POSITION
0 1 2 3 4 5 6 7
VERTICAL POSITION
0 1 2 3 4 5 6 7
fh/2
fh/2÷2
fh/2÷4
fs/2
fs/2÷2
fs/2÷4

FIG. 8B

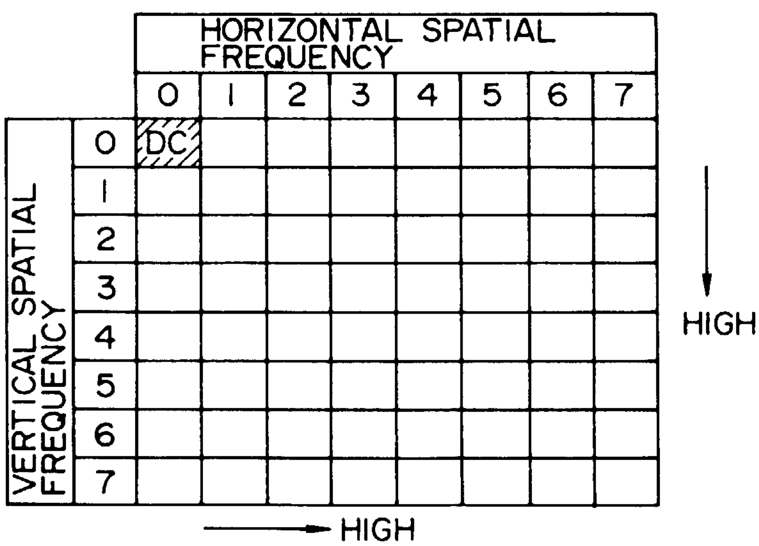
HORIZONTAL SPATIAL FREQUENCY
0 1 2 3 4 5 6 7
VERTICAL SPATIAL FREQUENCY
0 1 2 3 4 5 6 7
DC
HIGH
HIGH